Europäisches Patentamt

European Patent Office

Office européen des brevets

(19)

(11) Publication number: **0 158 416**
A1

# (12) EUROPEAN PATENT APPLICATION

(21) Application number: **85301062.7**

(22) Date of filing: **18.02.85**

(51) Int. Cl.⁴: **H 02 G 1/08**
**H 02 G 9/06**

(30) Priority: **21.02.84 GB 8404515**

(43) Date of publication of application:
**16.10.85 Bulletin 85/42**

(84) Designated Contracting States:
**AT BE CH DE FR IT LI NL SE**

(71) Applicant: **WATER RESEARCH CENTRE**
**P.O. Box 16 Henley Road Medmenham**
**Marlow Buckinghamshire SL7 2HD(GB)**

(72) Inventor: **Spooner, Martin Steven George Henry**
**Home Farm Cottages Burton Hill**
**Malmesbury Wiltshire(GB)**

(74) Representative: **Wain, Christopher Paul et al,**
**A.A. THORNTON & CO. Northumberland House 303-306**
**High Holborn**
**London WC1V 7LE(GB)**

(54) Installation of communications cables in a pipe.

(57) There is disclosed a method of running a communications cable through a pipe. A flexible, longitudinally split tubular sleeve (10) is first passed into said pipe from one end. An elongate insert (12) is then passed into the pipe from one end. The insert is formed with oppositely-directed longitudinal grooves (17) each adapted to receive slidably an opposed longitudinal edge of the sleeve. The insert (12) thus opens out the sleeve (10) for the latter to reline said pipe. The insert or the sleeve incorporates at least one cable or at least one duct for housing one or more cables.

FIG.2.

EP 0 158 416 A1

- 1 -

## INSTALLATION OF COMMUNICATIONS CABLES

This invention relates to the running of communications cables to dwellings or other buildings. These cables may serve for the distribution of information to those buildings, for example in a cable television system, or for collecting information from those buildings, and they may be used for two-way communication. The cables themselves may be for example coaxial cables or fibre optic cables or twisted pairs, or any combination of such cables may be used.

We have proposed to run communication cables to dwellings or other buildings through the pre-existing underground pipes which serve to drain sewage and/or surface and storm water away from those buildings. We have devised methods, machines and materials for carrying out this proposal, which methods, machines and materials are described in our United Kingdom patent application 8324177, published under No. 2129627A.

We have now devised improvements for installing communications cables through those pipes which lead away from individual dwellings or other buildings and connect into the sides of a further pipe, which further or main pipe receives and carries away matter from all those side-connecting or lateral pipes. These improvements are also suited to installing the communications cables through a pipe which leads into an inspection chamber from which another pipe extends for example to connect into the side of a said main pipe. The improvements are in essence applicable to pipes which have no intersections (connections into their own sides) along their length, and which permit of manual access, for example by way of an inspection chamber, at one or other or both of their ends.

Generally such pipes, for which these improvements are devised, are significantly smaller in diameter or cross-section than the main pipe into which they feed (directly or indirectly) as a side-connection, and generally they are relatively short in length but may exhibit quite sharp bends. Usually only a small-capacity cable or group of cables is to be installed in each such pipe. In view of these considerations, there is a need for techniques to be used in these pipes which are different in nature and generally simpler than the cable installation techniques suited for the main pipe.

In accordance with this invention, there is provided a method of running a communications cable through a pipe, comprising installing a flexible, longitudinally split tubular sleeve in said pipe by passing said split sleeve into said pipe from one end of the latter, then feeding an elongate insert into said pipe from said end thereof, which insert is formed with oppositely-directed longitudinal grooves which, in carrying out the method, slidably receive the opposed longitudinal edges of said sleeve, the insert thus opening out the sleeve for the latter to reline said pipe and said insert or the sleeve incorporating at least one cable or at least one duct for housing one or more cables.

The flexible sleeve can be passed quite freely along the pipe because of its longitudinal split. The elongate insert can also be passed quite freely along the installed sleeve, for example by pushing and for which purpose lubricant may be applied to its oppositely-directed grooves which slidably receive the opposed longitudinal edges of the sleeve. Preferably the installation is carried out such that the elongate insert is disposed throughout its length at the soffit (top) of the pipe into which it is installed.

As mentioned above, at least one duct may be provided in the elongate insert or in the sleeve (preferably adjacent one of its longitudinal edges) for housing the cable or cables which are to run through the pipe. Each such cable may already be housed within the duct when, respectively, the sleeve or insert is being installed. Alternatively, each cable may be run into the duct after the sleeve or insert is installed, either pushing that cable into the duct from the installing end of the pipe or drawing it in from the opposite end and for the latter purpose a draw line may already be housed in the duct when its sleeve or insert is being installed. Each such cable may for example simply comprise an optical fibre or group of optical fibres. Preferably a metallic layer (e.g. braid) surrounds the optical fibres or other signal carriers to protect them against rodent attack.

Also in accordance with this invention, there is provided an elongate insert formed with oppositely-directed longitudinal grooves for slidably receiving the opposed longitudinal edges of a longitudinally split sleeve. The elongate insert may comprise one or more ducts, the or each duct housing or being arranged for housing at least one communications cable, or the insert may comprise a communications cable which includes a sheath provided with said grooves.

Embodiments of this invention will now be described, by way of example only, with reference to the accompanying drawings, in which:

Figure 1 is a diagrammatic section through a main sewage-draining pipe and showing one of a plurality of lateral pipes connecting into it;

Figure 2 is a cross-section on much enlarged scale through the lateral pipe showing a relining sleeve and elongate insert installed therein in accordance with this invention; and

Figure 3 is a side view of a forward end of rodding used for pushing the sleeve along the lateral pipe.

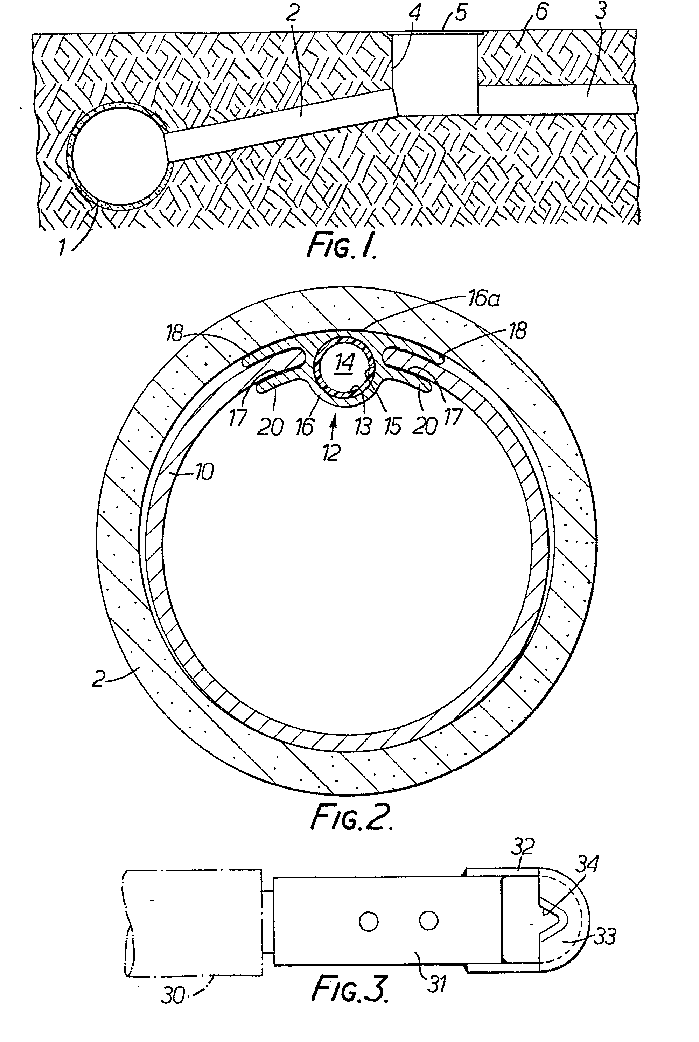

Referring to Figure 1, there is shown an example of pipe configuration for which this invention is applicable. In this example there is shown a main pipe 1 together with one of the plurality of lateral pipes 2 which connect into the sides of the main pipe at intervals along it. The lateral pipe 2 leads away from an individual dwelling or other building and typically, as shown, a pipe 3 will lead from that building to an inspection chamber 4 (closed by a manhole cover 5) and the pipe 2 leads from this chamber to the main pipe 1. In the drawing, each of pipes 2 and 3 is shown as being straight but in practice they may incorporate one or more bends. A plurality of pipes 3 (for example from respective dwellings) may lead into the inspection chamber 4, the or each pipe perhaps having another inspection chamber at its other end.

In order to run at least one communications cable to the building which the pipes 3,2 serve, it is necessary to install the cable or cables to run from the main pipe 1 and through pipe 2 at least to the inspection chamber 4. The or each such cable may be terminated within the inspection chamber, for coupling to another cable which leads to the building, perhaps buried in the ground 6. One installation procedure would be initially to install a draw line through the pipe 2 at least to the inspection chamber 4: then at some later stage, when the occupant of the dwelling concerned decides to be connected to the communication system, the draw line can be used to pull a cable through, from the dwelling, along the pipe 2 and into and along the main pipe 1 eventually to reach a manhole or the like which provides access to the main pipe 1, adjacent which manhole a distribution apparatus is situated. Moreover, the cable or draw line may be run through the or a respective pipe 3 as well as through pipe 2.

In accordance with this invention, for installing a cable thorugh the lateral pipe 2, firstly a flexible, longitudinally split tubular sleeve 10 (see Figure 2) is fed into and passed along the pipe 2 from the inspection chamber 4. At this stage, the sleeve is free to collapse in diameter and to flex more or less at will, so that it presents relatively little resistance to passing along the pipe 2. In some situations, the sleeve may simply be pushed along the pipe 2 from the inspection chamber and optionally use may be made of a lubricant. Alternatively or in addition, the sleeve may be pulled in by rodding: in this case, the rodding is laid within the sleeve and tied at its forward end to the forward end of the sleeve so that, by pushing the rodding progressively along pipe 2 from the inspection chamber, the rodding will serve to pull the sleeve along the pipe. Preferably as shown in Figure 3 the forward end of the rodding 30 is provided with a cutter 31 serving, upon manipulation of the rodding, to cut its ties with the sleeve once the forward end of the sleeve has reached the junction of pipe 2 with the main pipe 1. The cutter 31 shown comprises a metal loop portion 32 through which the ties will be passed, one side of the loop being partially closed by a cutting blade 33 formed with a V-shaped cutting edge 34 into which, upon retracting the rodding, the ties will locate and by which they will be severed.

The sleeve 10 may comprise a plain extruded sleeve especially if the pipe into which it is to be installed is straight or nearly straight. Otherwise preferably the sleeve 10 comprises a Petzetakis tube which has been severed longitudinally, namely an extruded plastics tube integrally reinforced by a helical bead of thicker and more rigid plastics material (see British patent specification 984 247). As shown preferably the sleeve is installed with its longitudinal split generally at the soffit (top) of the laterial pipe 2.

Next an elongate insert 12 (Figure 2) is passed along the lateral pipe 2 from the inspection chamber 4. In the example shown, insert 12 comprises an extruded plastics inner tube 13 defining a duct 14, an open-mesh metal braid 15 applied over tube 13, and an extruded outer layer 16 which is formed with oppositely directed longitudinal grooves 17,17 for slidably receiving the opposed longitudinal edges of the sleeve 10 as shown. In particular, the outer layer 16 is formed with a convex surface 16a conforming generally to the concave inner surface of the pipe 2 and extending laterally in each direction to define arcuate flanges 18,18. Shorter, arcuate flanges 20,20 are provided and disposed concentric with and radially-inwardly spaced from flanges 18, 18 to define the grooves 17,17.

In installing the elongate insert 12 within the pipe 2, firstly the leading end of the insert is engaged with the sleeve 10 at the inspection chamber 4, such that the opposed longitudinal edges of the sleeve 10 are slidably received within the grooves 17,17 as shown. The elongate insert is then pushed through the pipe 2 until its forward end reaches the main pipe 1. Lubricant may be applied to the grooves of the insert for assistance.

The insert 12 serves to open out the sleeve 10 into contact with the pipe surface over a major proportion of its circumference, and the sleeve 10 serves to support the insert 12 against the surface of the pipe 2 at its soffit (top).

If the duct 14 of the insert 12 does not already house the cable or cables required, then the or each cable can now (or subsequently) be passed into and along the duct 14 from the inspection chamber 4. A closed circuit television camera, advanced along main pipe 1, will serve to monitor when the sleeve 10, and then later the insert 12, reach the end of the lateral pipe 2. Similarly, the same television camera may be used to monitor when the cable (or a draw line for the cable) has been advanced to project by a predetermined length into the main pipe 1.

In one mode of operation, a cable or draw line is required to project by a predetermined length into main pipe 1 from the duct 14 of the insert 12, the cable or draw line carrying a hooking arrangement at its projecting end. Then a machine (described in our United Kingdom patent application 8324177) is advanced along the main pipe 1 to intercept the projecting line and pick up the hooking arrangement: the cable or draw line may then be pulled through the duct 14 and along pipe 1. The draw line, when used, can serve to pull the required cable or cables behind it.

The elongate insert may comprise the plastics outer layer 16 extruded over a metal duct of the type which comprises a metal tape wound helically and profiled so that the adjacent turns interlock along their inter-engaging longitudinal tape edges. The forward end of this insert (which is to project into the main pipe 1) may then have the extruded layer 16 stripped back for a predetermined length to provide a bare length of metal duct which is to project from the lateral pipe 2 and into the main pipe 1. This type of metal duct, when thus bared, will bend to a certain minimum bending radius (at which the adjacent turns of the metal tape will lock-up on the inner-side of the bend). There is thus provided a generally appropriately curved path for the draw line or cable to be pulled around as it is pulled through the duct and into the main pipe, and if the cable comprises an optical fibre then the minimum bending radius of the bared metal duct may be relied upon to prevent the optical fibre being bent to a curve of less than its permitted minimum bending radius. Alternatively, a ferrule which is rigid and exhibits the required curvature or which will flex to a limited curvature may be fixed as an end-piece to the forward end of the elongate insert to form an extension of its duct 14.

As previously mentioned, the cable or cables may be carried by the sleeve itself instead of by the elongate insert: preferably in this case the cable or cables will be disposed adjacent one of the longitudinal edges of the sleeve. For example the cable or cables might be moulded into the wall of the sleeve, or alternatively the sleeve wall would incorporate at least one duct corresponding to the duct 14 described above and in this case the or each such duct of the sleeve might adopt any of the forms of construction described above for the duct 14 and its mode of use would correspond.

The methods described above have related to installing a sleeve with its elongate insert into the pipe 2 (which leads from an inspection chamber 4 and connects into the side of a main pipe 1). The methods may equally be used for installing a sleeve and its elongate insert through a pipe 3, which typically extends between two inspection chambers but in any event will connect with an inspection chamber of one of its ends

- 9 -

(providing access for pushing the split sleeve into the
pipe and subsequently pushing the insert along the
installed sleeve).

CLAIMS

1.       A method of running a communications cable through a pipe, characterised in that it comprises the steps of installing a flexible, longitudinally split tubular sleeve (10) in said pipe (2) by passing said split sleeve into said pipe from one end thereof; and feeding an elongate insert (12) into said pipe from said one end thereof, which insert is formed with oppositely-directed longitudinal grooves (17) each adapted to receive slidably an opposed longitudinal edge of said sleeve (10) the insert thus opening out the sleeve for the latter to reline said pipe and said insert or the sleeve incorporating at least one cable or at least one duct (14) for housing one or more cables.

2.       A method as claimed in claim 1, further characterised by the step of applying lubricant to said oppositely-directed grooves of the insert.

3.       A method as claimed in either claim 1 or claim 2, characterised in that the elongate insert is disposed throughout its length at the soffit (top) of the pipe into which it is installed.

4.       A method as claimed in any one of the preceding claims, characterised in that said at least one duct (14) is provided in the elongate insert (12).

5.       A method as claimed in any one of claims 1 to 3, characterised in that said at least one duct (14) is provided in the sleeve.

6.      A method as claimed in either claim 4 or claim 5, characterised in that said at least one duct contains a cable or cables prior to its being installed.

7.      An elongate insert characterised in that it is formed with oppositely-directed longitudinal grooves (17) each adapted to receive slidably an opposed longitudinal edge of a longitudinally split sleeve (10).

8.      An elongate insert as claimed in claim 7, further characterised in that it comprises one or more ducts (14), the or each duct housing or being arranged for housing at least one communications cable.

9.      An elongate insert as claimed in claim 8, wherein the or each duct (14) comprises a metallic layer (15) to surround the communications cable.

10.      An elongate insert as claimed in claim 7, characterised in that it comprises a communications cable which includes s sheath provided with said grooves (17).

0158416

1/1

**FIG. 1.**

**FIG. 2.**

**FIG. 3.**

European Patent
Office

**EUROPEAN SEARCH REPORT**

0158416

Application number

EP 85 30 1062

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| A | FR-A-2 193 523 (SIEMENS) <br> * Page 3, lines 1-15; figures * <br> --- | 1,3 | H 02 G 1/08 <br> H 02 G 9/06 |
| A | US-A-3 928 714 (MATCHETT) <br> * Column 2, lines 20-23; column 3, lines 34-46; figure 4 * <br> --- | 1 | |
| A,P | GB-A-2 124 728 (MICRO CONSULTANTS) <br> * Page 2, lines 8-24; figures 1-5 * <br> ----- | 1 | |

| TECHNICAL FIELDS SEARCHED (Int Cl 4) |
|---|
| H 02 G 1/00 <br> H 02 G 9/00 |

The present search report has been drawn up for all claims

| Place of search | Date of completion of the search | Examiner |
|---|---|---|
| THE HAGUE | 29-05-1985 | LOMMEL A. |